Europäisches Patentamt

(19) European Patent Office

Office européen des brevets

(11) Publication number: **0 263 864 B1**

(12) **EUROPEAN PATENT SPECIFICATION**

(45) Date of publication of patent specification:
17.07.91 Bulletin 91/29

(21) Application number: 87902590.6

(22) Date of filing: 03.04.87

(86) International application number:
PCT/GB87/00233

(87) International publication number:
WO 87/05780 08.10.87 Gazette 87/22

(51) Int. Cl.⁵: **A01N 55/02, A01N 41/04, A01N 25/06, // (A01N55/02, 31:02), (A01N41/04, 31:02)**

(54) **A METHOD FOR TREATING SURFACES TO DESTROY MICRO-ORGANISMS.**

The file contains technical information submitted after the application was filed and not included in this specification ·

(30) Priority: 04.04.86 GB 8608332

(43) Date of publication of application:
20.04.88 Bulletin 88/16

(45) Publication of the grant of the patent:
17.07.91 Bulletin 91/29

(84) Designated Contracting States:
AT BE CH DE FR GB IT LI LU NL SE

(56) References cited:
DE-A- 3 229 097
GB-A- 1 303 976
GB-A- 1 542 423

(56) References cited:
**Chemical Abstracts, Volume 94, no. 15, 13 April 1981, (Columbus, Ohio, U.S), M.C. Croxson et al.: "Extraction of rotavirus from human feces by treatment with lithium dodecyl sulfate", see page 331, abstract 117319t, Appl. Environ. Microbiol. 1981, 41(1), 255-60**
**Chemical Abstracts, volume 79, no. 23 10 December 1973, (Columbus, Ohio, US), R.M.McCombs et al.: "Disruption of herpes virus nucleocapsids using lithium iodide, guanidine, and mercaptoethanol", see page 141, abstract 134183b, J.Gen.Virol.1973, 20 (Pt.3) 395-400**

(73) Proprietor: **MEDICAL RESEARCH INTERNATIONAL LIMITED**
**28 The Esplanade**
**Perth Western Australia 6000 (AU)**

(72) Inventor: **SKINNER, Gordon, R., B.**
**2 Paddock Drive Dorridge**
**Solihull West Midlands (GB)**
Inventor: **BUCHAN, Alexander**
**278 Harborne Park Road**
**Harborne Birmingham (GB)**

(74) Representative: **Attfield, Donald James et al**
**BROOKES, MARTIN & WILSON Prudential Buildings 5 St. Philip's Place**
**Birmingham B3 2AF (GB)**

## Description

The present invention relates to a method of treatment of a surface to destroy extracellular (free) and intracellular micro-organisms and which will, in addition, inhibit the intracellular replication of certain viruses, by the application to the surface of a novel disinfectant solution.

There is need for an effective disinfectant solution which will cover the entire spectrum of pathogenic micro-organisms and will also be capable of digesting whole desquamated cells from the human body thereby gaining access to micro-organisms which may be replicating in these cells or 'surviving' in these cells in a stable state. This is important as certain micro-organisms, for example herpes simplex virus or varicellazoster virus, are relatively unstable in an extracellular situation but are extremely stable within their host cells which moreover can contain large numbers of infectious virus particles.

A disinfectant solution which is only capable of destroying extracellular viruses will be seriously deficient when the major contaminant comprises infected cells from human subject which have been shed or sheared from epithelial surfaces by, for example, skin on the posterior aspects of the upper thighs from sitting on toilet seats or from skin on the hands which have been holding lavatory flush handles or lavatory door knobs. It is possible that micro-organisms which have escaped destruction might subsequently replicate extracellularly (in the case of fungi or bacteria for example), on the contaminated surface or intracellularly in the case of viruses or chlamydia under favourable circumstances. This will not occur in the milieu of the disinfecttant solution and DNA viruses will not replicate on account of diffusion of the lithium cation into cells harbouring such viruses whether desquamated from the body or possibly in the surface epithelial cells of the body by transference of lithium cation from the treated surface.

The present invention is directed towards the provision of a disinfectant solution which will destroy micro-organisms which are free in an extracellular environment and will destroy intracellular micro-organisms and will further provide an environment which is inhibitory to the growth of extracellular micro-organisms and certain viruses which replicate in desquamated cells or in surface cells on the human subject.

The invention is also directed towards the provision of a solution which when applied by washing or spraying onto a surface will deposit a film that will destroy micro-organisms or inhibit the growth of certain micro-organisms that may subsequently be deposited on that surface.

It is known that certain substances have specific activities against micro-organisms in the extracellular or intracellular environment and also have specific activites countering the replication of viruses.

An example of a known lithium compound for the treatment of human beings and animals is given in GB-A-1303976 which describes the use of lithium undecylenate in the treatment of fungal infections of the skin and mucous membranes. Lithium undecylenate is used in a mixture with water, alcohols, glycerine and/or glycols and polyglycols in concentrations of from 1-10% w/v.

The present invention seeks to combine individual activities of known substances in combination in a single solution in a manner in which those activities are in no way adversely affected. The invention therefore provides a novel disinfectant solution in which the components thereof interact to give a surprisingly wide degree of activity against micro-organisms and viruses both in extracellular and intracellular environments.

Accordingly the present invention provides a disinfectant solution comprising a non-ionic detergent and lithium dodecyl sulphate dissolved in an aliphatic alcohol, the non-ionic detergent being the condensation product of a polyglycol and an octyl or nonyl phenol, the concentration of the alcohol being not less than 50% by volume.

The preferred alcohol is ethyl alcohol. Other alcohols e.g. methyl alcohol may, however be used. The higher alcohols are less preferred partly because of odour problems ; the effectiveness of the alcohol also decreases with increasing carbon chain length.

The concentration of the non-ionic detergent should preferably be at least 0.2% v/v.

The concentration of the lithium dodecylsulphate should preferably be at least 0.2% w/v.

The disinfectant may be conveniently applied as an aerosol spray using a suitable propellant such as dichlorodifluoromethane,

In an aerosol spray the alcohol content should not be less than 50% by volume of the total propellant plus solution.

The invention will now be more fully described with reference to the following example.

A disinfectant solution was prepared in the concentrations as indicated in Table 1 and in the concentrations when mixed with propellant in the aerosol solution again in Table 1. The resulting disinfectant solution is active against fungi, protozoa, chlamydia, bacteria and viruses. The spectrum of antimicrobial activity of the disinfectant solution is tabulated in Table 2. The tests were carried out by mixing 0.25 microlitres of disinfectant solution and 0.25 microlitres of a suspension of the micro-organisms and agitating for four minutes at 25°C. The residual micro-organisms titrated either on solid media or by plaque titration in the case of viruses. The activity of the solution against protozoa was tested using trichomonas vaginalis where immobility of the protozoa and the subsequent inability to replicate was taken as evidence of protozoal inactivation.

Table 2 shows that micro-organisms tested were reduced by at least 10,000 fold and generally by over 100,000 fold following exposure to a solution of disinfectant having the composition shown in Table 1.

The efficacy of the disinfectant solution of the present invention to inactivate intracellular micro-organisms and to ensure that living cells or desquamated inactive cells were no longer capable of replicating intracellular micro-organisms was investigated on whole uninfected hamster cells and on hamster cells infected with type 2 herpes simplex virus (HSV). Three criteria were investigated, namely the morphological appearance of cells exposed to the components of the solution for five minutes, the ability of the cells to subsequently replicate and the ability of the cells to sustain virus replication following this exposure ; these latter two criteria were considered important as some viruses are capable of replicating in isolated cell nuclei and morphological damage may not correlate with loss of ability of the cells to divide and provide susceptible daughter cells or the morphologically damaged cells themselves to provide a susceptible host for virus for replication.

These tests were conducted as follows : A suspension of $10^7$ infected and uninfected hamster kidney cells at a concentration of $10^7$ cell per ml. were added to an equal volume of a series of doubling dilutions of the solution of Table 1. The effect on cell morphology was adjudged by removal of cells from the solution after five minutes and examination under the light microscope. The ability of the cells to seed and replicate was examined by washing of the cells, resuspension and transference to plastic petri dishes and examination after 24 hours by light microscopy. The susceptibility to virus infection was adjudged by addition of virus at a concentration of .1 plaque forming units per cell and undertaking a growth experiment over sixteen hours in these cells which had been treated in this way with the disinfectant solution. As a control a parallel batch of cells which had not been treated with the disinfectant solution were exposed to a similar concentration of virus to establish that a normal virus growth pattern was obtained. Table 3 shows that cellular destruction ; inhibition of potential to replicate and susceptibility to virus infection are obtained at high dilution of both detergent and lithium cation. Ethyl alcohol is known to fix mammalian cells and alteration of cell morphology will not be easily apparent. Cells exposed to a solution containing 50% by volume ethyl alcohol in this way were no longer able to sustain virus replication.

The antimicrobial activity which remained on a surface which had been sprayed by the disinfectant solution prior to addition of micro-organisms was investigated using as an example type 2 herpes simplex virus. A surface received one application of disinfectant solution in aerosol form twenty minutes and twenty four hours prior to application of herpes simplex virus. The virus on the surfaces which are sprayed twenty minutes before were reduced by over 100,000 fold and virus titres on surfaces which had been sprayed twenty four hours previously were reduced by over 1,000 fold. This is an important aspect of the product and indicates that surfaces can be protected by prior application of the spray.

## TABLE 1

### DISINFECTANT SOLUTION COMPOSITION

Prior to mixing with propellant[*]

| | | |
|---|---|---|
| Nonidet | $^v/v$ | 1.26 |
| Lithium do-decyl sulphate | $^w/v$ | 0.40 |
| Alcohol | $^v/v$ | 100 |

Following mixing with propellant

| | | |
|---|---|---|
| Nonidet | $^v/v$ | 0.76 |
| Lithium do-decyl sulphate | $^w/v$ | 0.24 |
| Alcohol | $^v/v$ | 60.00 |
| Dichlorodifluoromethane | $^v/v$ | balance |

## TABLE 2

### Spectrum of anti-microbial activity of solution of Table 1

| | Initial titre of micro-organisms | Titre following exposure to MRI-1 solution |
|---|---|---|
| Staph. aureus | $2.5 \times 10^7$ | 0 |
| epidermidis | $1.2 \times 10^5$ | 0 |
| Strep. viridans | $3 \times 10^5$ | 0 |
| pyogenes | $1.9 \times 10^6$ | 0 |
| faecalis | $1.3 \times 10^7$ | 0 |
| E coli | $6.2 \times 10^7$ | 0 |
| Pseudomonas | $2.5 \times 10^5$ | 0 |
| Proteus | $7 \times 10^5$ | 0 |
| Klebsiella | $1.4 \times 10^5$ | 0 |
| Salmonella abony | $1 \times 10^7$ | 0 |
| HSV 1 & 2 | $1 \times 10^7$ | 0 |
| C albicans | $1.2 \times 10^5$ | 0 |
| Trichomonas vaginalis | $1 \times 10^7$ | 0 |

## TABLE 3

### Effect of components of the solution of Table 1 on intact uninfected and HSV-uninfected hamster kidney cells

#### Concentration (%) resulting in loss of:

| | Cell Morphology | | Cell Replication | | Susceptibility to virus infection | |
|---|---|---|---|---|---|---|
| | Uninfected | Infected | Uninfected | Infected | Uninfected | Infected |
| Nonidet $^v$/v | 0.1 | 0.05 | 0.05 | NA | 0.08 | NA |
| Lithium do-decyl sulphate $^w$/v | 0.05 | 0.01 | 0.03 | NA | 0.08 | NA |
| Alcohol $^v$/v | NA | NA | 50 | NA | 50 | NA |
| Solution MRI-1 $^v$/v | 2.0 | 1.0 | 2.0 | NA | 2.0 | NA |

Cells were reacted with test solutions for 5 minutes at 25C.

## Claims

1. A disinfectant effective against viruses and micro-organisms comprising a non-ionic detergent and lithium dodecyl sulphate dissolved in an aliphatic alcohol, the non-ionic detergent being the condensation product of a polyglycol and an octyl or nonyl phenol, the concentration of the alcohol being not less than 50% by volume.

2. The disinfectant according to claim 1 wherein the concentration of lithium dodecyl sulphate is not less than 0.2% w/v.

3. The disinfectant of claim 1 or claim 2 wherein the concentration of the non-ionic detergent is not less than 0.2% w/v

4. The disinfectant according to claims 1, 2 or 3 wherein the alcohol is methyl or ethyl alcohol.

5. An aerosol spray comprising the solution of any one of the preceeding claims and a propellent, wherein the concentration of the alcohol is not less than 50% v/v of the total solution plus propellant.

## Patentansprüche

1. Ein gegen Viren und Mikroorganismen wirksames Desinfektionsmittel, das wenigstens teilweise besteht aus einem nichtionischen Detergens und Lithiumdodecylsulfat, gelöst in einem aliphatischen Alkohol, wobei das nichtionische Detergens das Kondensationsprodukt aus eine Polyglykol und einem Octyloder Nonylphenol ist und wobei die Konzentration des Alkohols nicht geringer ist als 50 Volumen-%.

2. Desinfectionsmittel nach Anspruch 1, worin die Konzentration des Lithiumdodecylsulfats nicht geringer ist als 0,2% Gewicht/Volumen.

3. Desinfektionsmittel nach Anspruch 1 oder Anspruch 2, worin die Konzentration des nichtionischen Detergens nicht geringer ist als 0,2% Gewicht/Volumen.

4. Desinfektionsmittel nach den Ansprüchen 1, 2 oder 3, worin der Alkohol Methyl- oder Ethylalkohol ist.

5. Ein Aerosolspray, der wenigstens teilweise besteht aus der Lösung nach einem der vorausgehenden Ansprüche und einem Treibmittel, worin die Konzentration des Alkohols nicht geringer ist 50 Volumen-%, bezogen auf die Gesamtmenge der Losung plus Treibmittel.

**Revendications**

1. Désinfectant efficace contre les virus et micro-organismes comprenant un détergent et du sulfate dodécylique de lithium dissous dans un alcool aliphatique, caractérisé en ce que le détergent non ionique est le produit de condensation d'un polyglycol et d'un phénol octylique ou nonylique et en ce que la concentration de l'alcool n'est pas inférieure à 50% en volume.

2. Désinfectant selon la revendication 1, caractérisé en ce que la concentration de sulfate dodécylique de lithium n'est pas inférieure à 0,2% en poids/au volume.

3. Désinfectant selon la revendication 1 ou la revendication 2, caractérisé en ce que la concentration de détergent non ionique n'est pas inférieure à 0,2% en poids/au volume.

4. Désinfectant selon l'une quelconque des revendications 1,2,3 caractérisé en ce que l'alcool est de l'alcool méthylique ou éthylique.

5. Liquide pour aérosol contentant la solution selon chacune des revendications précédentes et un propulseur, caractérisé en ce que la concentration d'alcool n'est pas inférieure à 50% en volume/au volume de la solution totale plus le propulseur.